# EUROPEAN PATENT APPLICATION

(11) **EP 2 423 666 A2**
(43) Date of publication of application: **29.02.2012**
(21) Application number: 11178850.1
(22) Date of filing: 25.08.2011
(51) Int. Cl.: G01N 15/06

(54) **Particulate matter detection device**

(30) Priority: 26.08.2010 JP 2010189926
(71) Applicant: NGK Insulators, Ltd., Nagoya-shi, Aichi 467-8530 (JP); Honda Motor Co., Ltd., Tokyo 107-8556 (JP)
(72) Inventor: Tokuda, Masahiro, Nagoya-shi, Aichi 467-8530 (JP); Sakuma, Takeshi, Nagoya-shi, Aichi 467-8530 (JP); Eegami, Takashi, Nagoya-shi, Aichi 467-8530 (JP); Kondo, Atsuo, Nagoya-shi, Aichi 467-8530 (JP); Miki, Masanobu, Wako-city, Saitama 351-0193 (JP); Iwama, Keizo, Wako-city, Saitama 351-0193 (JP); Okayama, Tatsuya, Wako-city, Saitama 351-0193 (JP)
(74) Representative: Paget, Hugh Charles Edward

(57) **Abstract**

There is disclosed a particulate matter detection device having a high measurement sensitivity. A particulate matter detection device 100 of the present invention includes a plate-like element base material 11, and a pair of measurement electrodes 12a and 12b arranged in the element base material 11, each of the measurement electrodes 12a and 12b is a combteeth-like electrode including a plurality of planarly arranged combteeth portions 13, and a comb spine portion 14 which connects the plurality of combteeth portions 13 of each of the measurement electrodes 12a and 12b to one another at one end of each of the plurality of combteeth portions, the combteeth portions 13 of the measurement electrodes 12a and 12b are arranged to engage with each other with a space being left therebetween, and the comb spine portion 14 of at least one of the measurement electrodes 12 is covered with a comb spine covering portion 15 made of a dielectric material. The particulate matter detection device 100 allows a particulate matter to adhere to and around the pair of measurement electrodes 12a and 12b, and measured a change of electric characteristics between the pair of measurement electrodes 12a and 12b, to detect the particulate matter.

## Description

### BACKGROUND OF THE INVENTION

### Field of the Invention

The present invention relates to a particulate matter detection device, and more particularly, it relates to a particulate matter detection device which has a high measurement sensitivity and which can lengthen a period of time until a detecting portion is saturated with an adhering particulate matter.

### Description of the Related Art

A flue exhaust gas or a diesel engine exhaust gas includes a particulate matter (PM) such as soot, which has been a cause for air pollution. For the purpose of removing the particulate matter, a filter (a diesel particulate filter: DPF) made of a ceramic material or the like has widely been used. The DPF made of the ceramic material can be used for a long period of time, but defects such as cracks or melting damages due to thermal deterioration or the like might be generated, and a micro amount of the particulate matter might leak. When such defects are generated, from the viewpoint of the prevention of the air pollution, it is remarkably important to immediately detect the generation of the defects, thereby recognizing the abnormality of a device.

As a method of detecting the generation of such defects, there is disclosed a method of disposing a particulate matter detection device on a downstream side of the DPF (e.g., see Patent Documents 1 and 2).

For example, the particulate matter detection device disclosed in Patent Document 1 includes a detection device main body which includes a through hole formed in one end thereof and which is long in one direction, and at least a pair of electrodes embedded in a wall which forms this through hole and covered with a dielectric material. It is possible to electrically adsorb, by the wall surface of this through hole, a charged particulate matter included in a fluid flowing into the through hole, or a particulate matter charged by discharge which occurs in the through hole when a voltage is applied across the pair of electrodes and included in the fluid flowing into the through hole. When a change of electric characteristics of the wall which forms the through hole is measured, it is possible to detect a mass of the particulate matter adsorbed by the wall surface of the through hole.

Consequently, the conventional particulate matter detection device allows the particulate matter included in a measurement target gas to adhere to and around the pair of electrodes which are sensors, and measures the change of the electric characteristics between the pair of electrodes, to detect the particulate matter in the measurement target gas.

Moreover, for example, as shown in Fig. 5 of Patent Document 2, as the pair of electrodes which are sensors for measurement, there are suggested a pair of electrodes which are branched into a plurality of electrodes, respectively, so that the branched electrodes face each other and a plurality of facing portions are present. When such electrodes are used and, for example, an electrostatic capacity is measured as electric characteristics between the pair of electrodes, a measurement sensitivity of the electrodes can be enhanced.

### Prior Art Documents

### Patent Document

[Patent Document 1] JP-A-2009-186278
[Patent Document 2] JP-A-2010-32488

### SUMMARY OF THE INVENTION

When an excessive amount of a particulate matter adheres to a detecting portion of such a conventional particulate matter detection device, the detecting portion is saturated by the particulate matter, and a measurement sensitivity cannot be obtained. Therefore, it is necessary to periodically remove (e.g., burn and remove) the particulate matter adhering to the detecting portion, thereby regenerating the device. In the conventional detection device, however, especially when the above combteeth-like electrodes are used as the detecting portion, there has been a problem that a period of time until this detecting portion is saturated is short. Therefore, it is necessary to frequently regenerate the device. During the regenerating of the device, the particulate matter cannot be detected, and hence a period of time when any particulate matter is not detected by the detection device might lengthen.

Moreover, when a space between electrodes is enlarged, the period of time till the above saturation can be lengthened, but in this case, the measurement sensitivity of the detection device deteriorates. In particular, regulations on the removal of the particulate matter from an exhaust gas tend to be strengthened worldwide, and there has been demanded the development of a detection device which can detect a particulate matter with a higher sensitivity.

In consequence, the lengthening of the period of time until the detecting portion is saturated and the enhancing of the measurement sensitivity have an antinomic relation, and in the conventional particulate matter detection device, it has remarkably been difficult to achieve both of them at the same time.

The present invention has been developed in view of the above problem, and an object thereof is to provide a particulate matter detection device which has a high measurement sensitivity and which can lengthen a period of time until a detecting portion is saturated with an adhering particulate matter.

The present inventors have intensively performed investigations and have eventually found that by a constitution in which combteeth extend in a direction which is vertical to a flow direction of a measurement target gas and a space between combteeth portions on an outflow side of the measurement target gas is larger than a space of combteeth portions on an inflow side of the measurement target gas, a period of time until a detecting portion is saturated can be lengthened while maintaining a high measurement sensitivity, thereby completing the present invention. According to the present invention, a particulate matter detection device is provided as follows.

[1] A particulate matter detection device comprising: a plate-like element base material; a pair of measurement electrodes arranged in the element base material; characteristics measurement means for measuring electric characteristics between the pair of measurement electrodes; and particulate matter amount calculation means for obtaining an amount of a particulate matter collected in and around the pair of measurement electrodes on the basis of a change amount of the electric characteristics measured by the characteristics measurement means, wherein the measurement electrodes constituting the pair of measurement electrodes are combteeth-like electrodes each including a plurality of planarly arranged combteeth portions, and a comb spine portion which connects the plurality of combteeth portions of each of the measurement electrodes to one another at one end of each of the plurality of combteeth portions, and the plurality of combteeth portions are arranged in the element base material so that combteeth extend in a direction which is vertical to a flow direction of a measurement target gas and a mutual space between the combteeth portions of the one measurement electrode and the combteeth portions of the other measurement electrode on an outflow side of the measurement target gas is larger than a mutual space between the combteeth portions of the one measurement electrode and the combteeth portions of the other measurement electrode on an inflow side of the measurement target gas.

[2] The particulate matter detection device according to the above [1], wherein the mutual space between the combteeth portions in a region on the outflow side of the measurement target gas is larger than the mutual space between the combteeth portions in a region other than the outflow region on the inflow side of the measurement target gas, and the mutual space between the combteeth portions increases stepwise for each region from the region on the inflow side to the other region on the outflow side.

[3] The particulate matter detection device according to the above [1] or [2], wherein at least part of a mutual space between the combteeth portions of the one measurement electrode and the combteeth portions of the other measurement electrode gradually increases from the inflow side to the outflow side of the measurement target gas.

[4] The particulate matter detection device according to any one of the above [1] to [3], wherein the mutual space between the combteeth portions of the one measurement electrode and the combteeth portions of the other measurement electrode on the outflow side of the measurement target gas is from 1.5 to 10 times as much as the mutual space between the combteeth portions of the one measurement electrode and the combteeth portions of the other measurement electrode on the inflow side of the measurement target gas.

[5] The particulate matter detection device according to any one of the above [1] to [4], wherein the comb spine portion of at least one of the measurement electrodes is covered with a comb spine covering portion made of a dielectric material.

[6] The particulate matter detection device according to the above [5], wherein at least part of the surfaces of the pair of measurement electrodes is covered with an electrode protective film made of a dielectric material having a smaller thickness than the comb spine covering portion.

[7] The particulate matter detection device according to any one of the above [1] to [4], wherein the element base material is a device main body which includes at least one through hole formed in one end thereof and which is long in one direction, the combteeth portions of the pair of measurement electrodes are arranged on an inner side surface of one wall which forms the through hole or in the wall, and the comb spine portions of the pair of measurement electrodes extend to a position where there is disposed a wall rising from the wall on which the combteeth portions are arranged, among the walls which form the through hole.

### Effect of the Invention

In a particulate matter detection device of the invention according to claim 1, combteeth extend in a direction which is vertical to a flow direction of a measurement target gas, and a mutual space between combteeth portions of one measurement electrode and combteeth portions of the other measurement electrode on an outflow side of the measurement target gas is larger than a mutual space between the combteeth portions of the one measurement electrode and the combteeth portions of the other measurement electrode on an inflow side of the measurement target gas. According to such a constitution, a measurement sensitivity is enhanced, and it is possible to lengthen a period of time until a detecting portion is saturated with an adhering particulate matter.

That is, on the inflow side of the measurement target gas, the mutual space between the combteeth portions become comparatively narrow, and when the particulate matter adheres on the combteeth portions, a change of electric characteristics can satisfactorily be detected. On the other hand, on the outflow side of the measurement target gas, the mutual space between the combteeth portions becomes relatively wide, and hence it is possible to lengthen the period of time until the detecting portion is saturated with the adhering particulate matter. More specifically, in an initial stage in which the particulate matter is detected, detection with a high measurement sensitivity is realized in a region on the inflow side of the measurement target gas. Moreover, even if the inflow-side region is saturated with the particulate matter and the measurement sensitivity cannot easily be obtained, the detection can continuously be performed in an outflow-side region where the space between the combteeth is comparatively large. As compared with a conventional particulate matter detection device, a time interval of the regeneration of the detection device can further be lengthened.

That is, the particulate matter tends to adhere from an upstream portion (i.e., the inflow side) of the flow of the measurement target gas. In this case, a smaller amount of the particulate matter leaking and flowing from the upstream portion adheres to a downstream portion (i.e., a downstream side) than to the upstream portion, but the space between the combteeth is set to be larger than in the upstream portion. Therefore, the change of the electric characteristics cannot be grasped. Afterward, when the upstream portion is saturated with the adhering particulate matter, inflow to the downstream portion increases, but up to this time, the amount of the particulate matter adhering to the downstream portion increases owing to the particulate matter leaking and flowing from the upstream portion. Therefore, the change of the particulate matter in the downstream portion can be detected as the change of the electric characteristics. In this way, a particulate matter detection sensitivity of the downstream portion is intentionally set to be low, whereby the particulate matter can more intermittently be detected by utilizing adhering characteristics of the particulate matter.

It is to be noted that when it is mentioned that the detection portion is "saturated", it is meant that when the particulate matter adheres to the surfaces of the combteeth portions constituting the detecting portion, a proportional relation is established between a change amount of the electric characteristics and the amount of the adhering particulate matter, but if a large amount of the particulate matter adheres, the change of the electric characteristics decreases, and the measurement sensitivity cannot be obtained. For example, when a calibration curve is prepared by using the change amount of the electric characteristics and the amount of the particulate matter, a state where the change amount of the electric characteristics is peaked is the state where the detecting portion is saturated.

Moreover, in the particulate matter detection device of the invention according to claim 2, at least part of the space between the combteeth portions increases stepwise for each region from one region on the inflow side of the measurement target gas to the other region on the outflow side. According to such a constitution, the measurement can be performed so that a detection surface successively moves stepwise from an initial stage where the particulate matter is detected, and in each region (i.e., each stepwise increasing region), the particulate matter can stably be detected.

Furthermore, in the particulate matter detection device of the invention according to claim 3, the space between the combteeth portions gradually increases from the inflow side to the outflow side of the measurement target gas, and hence the measurement can be performed so that an actual detection surface moves from the region on the inflow side toward the outflow side. Therefore, the particulate matter can more stably be detected.

In the particulate matter detection device of the invention according to claim 4, after the inflow-side region is saturated, a region other than the inflow-side region can satisfactorily be used as the detection surface. For example, when the space between the combteeth portions on the outflow side is less than 1.5 times as much as the space between the combteeth portions on the inflow side, a difference between the inflow side and the outflow side is small, and the whole detection surface is comparatively equally saturated. When the above space exceeds ten times, the difference in the space between the combteeth portions becomes excessively large, and it might be difficult to smoothly shift the detection surface from the inflow side to the outflow side.

Moreover, in the particulate matter detection device of the invention according to claim 5, the comb spine portion of at least one of the measurement electrodes is covered with a comb spine covering portion made of a dielectric material, whereby a portion covered with the comb spine covering portion is excluded from a substantial detection surface, and the particulate matter can satisfactorily be detected. That is, in the present invention, the mutual space between the combteeth portions on the outflow side is larger than that on the inflow side in the flow direction of the measurement target gas, but from the viewpoint of the enhancement of the measurement accuracy, the mutual space between the pair of measurement electrodes is preferably predetermined to a certain degree in each region in a direction which is vertical to the flow direction of the measurement target gas (i.e., this inflow-side region in a case where the inflow side of the measurement target gas is mainly used as the detection surface in the initial measurement stage). However, a space between portions where the combteeth portions engage with the comb spine portion is different from the space between the combteeth portions, whereby owing to the comb spine portion (more specifically, gaps among the comb spine portion and the combteeth portions), the measurement accuracy of the detection device might relatively deteriorate. Therefore, the comb spine portion which might be the above factor for deteriorating the measurement accuracy is covered to exclude the portion from the detection surface, whereby while producing the effect of the invention according to claim 1, the measurement accuracy can further be enhanced. Moreover, when such comb spine covering portions are arranged for the comb spine portions of both the measurement electrodes, the measurement target gas can be allowed to flow through the two comb spine covering portions, and a satisfactory gas flow can be realized.

In the particulate matter detection device of the invention according to claim 6, at least part of the electrodes is covered with an electrode protective film having a smaller thickness than the comb spine covering portion, whereby the corrosion of the measurement electrode can satisfactorily be prevented.

Moreover, in the particulate matter detection device of the invention according to claim 7, the satisfactory gas flow of the measurement target gas can be realized. Moreover, the above comb spine covering portion can be formed by part of the walls which form the through hole, which can simplify the constitution of the detection device. It is to be noted that the invention according to claims 1 to 7 corresponds to the invention described in the above [1] to [7].

### BRIEF DESCRIPTION OF THE DRAWINGS

Fig. 1A is a plan view schematically showing an embodiment of a particulate matter detection device of the present invention;
Fig. 1B is an enlarged plan view showing an enlarged part where a pair of measurement electrodes of the particulate matter detection device shown in Fig. 1A are arranged;
Fig. 2 is an enlarged plan view showing an enlarged part where a pair of measurement electrodes are arranged in another embodiment of the particulate matter detection device of the present invention;
Fig. 3 is an enlarged plan view showing an enlarged part where a pair of measurement electrodes are arranged in still another embodiment of the particulate matter detection device of the present invention;
Fig. 4 is an enlarged plan view showing an enlarged part where a pair of measurement electrodes are arranged in a further embodiment of the particulate matter detection device of the present invention;
Fig. 5 is an enlarged plan view showing an enlarged part where a pair of measurement electrodes are arranged in a further embodiment of the particulate matter detection device of the present invention;
Fig. 6A is a front view schematically showing a still further embodiment of the particulate matter detection device of the present invention;
Fig. 6B is a side view showing one side surface of the particulate matter detection device shown in Fig. 6A;
Fig. 6C is a side view showing the other side surface of the particulate matter detection device shown in Fig. 6A;
Fig. 6D is a back view of the particulate matter detection device shown in Fig. 6A;
Fig. 7 is an exemplary diagram showing a section cut along the A-A' line of Fig. 6B;
Fig. 8 is an exemplary diagram showing a section cut along the B-B' line of Fig. 7;
Fig. 9 is an exemplary diagram showing a section cut along the C-C' line of Fig. 7:
Fig. 10 is an exemplary diagram showing a section cut along the D-D' line of Fig. 7;
Fig. 11 is an exemplary diagram showing a section cut along the E-E' line of Fig. 7;
Fig. 12 is an exemplary diagram showing a section cut along the F-F' line of Fig. 7; and
Fig. 13 is a graph showing a relation between a change amount ΔC ([pF]) of an electrostatic capacity and a concentration [mg/m³] of a particulate matter amount measured by the particulate matter detection device.

### DESCRIPTION OF THE PREFERRED EMBODIMENTS

Hereinafter, a mode for carrying out the present invention will specifically be described, but it should be understood that the present invention is not limited to the following embodiments and changes, modifications and the like of design can appropriately be added thereto on the basis of the ordinary knowledge of a person skilled in the art without departing from the scope of the present invention.

### [1] Particulate Matter Detection Device:

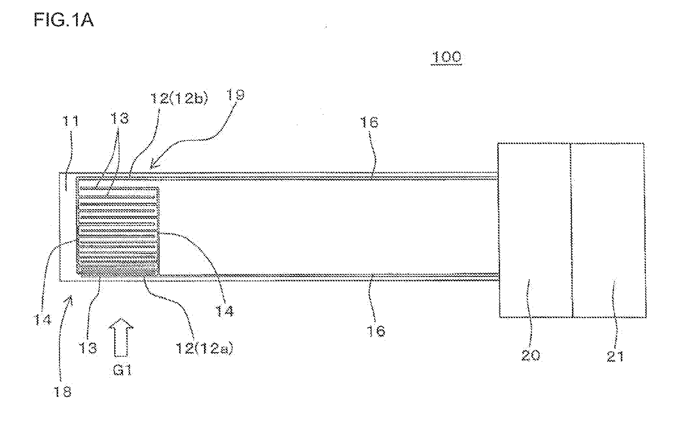

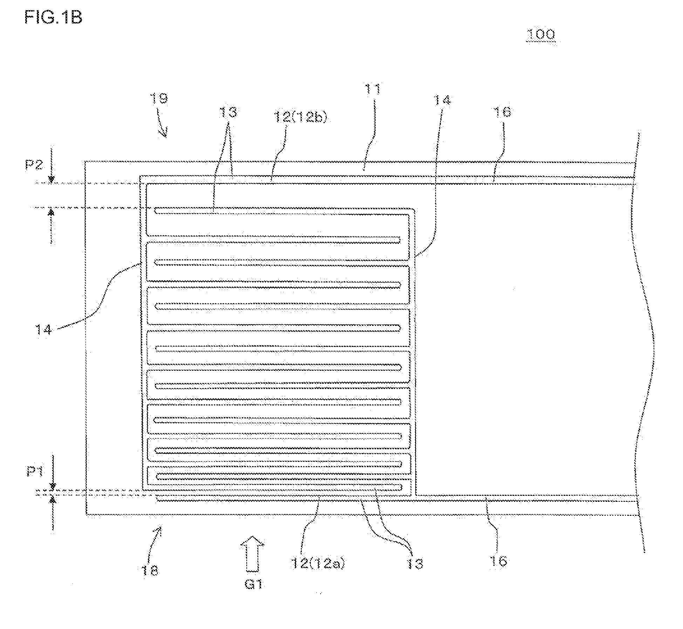

As shown in Fig. 1A and Fig. 1B, an embodiment of a particulate matter detection device of the present invention is a particulate matter detection device 100 including a plate-like element base material 11; a pair of measurement electrodes 12 (12a and 12b) arranged in the element base material 11; characteristics measurement means 20 for measuring electric characteristics between the pair of measurement electrodes 12a and 12b; and particulate matter amount calculation means 21 for obtaining the amount of a particulate matter collected in and around the pair of measurement electrodes 12a and 12b on the basis of a change amount of the electric characteristics measured by the characteristics measurement means 20.

Here, Fig. 1A is a plan view schematically showing the embodiment of the particulate matter detection device of the present invention, and Fig. 1B is an enlarged plan view showing an enlarged part where a pair of measurement electrodes of the particulate matter detection device shown in Fig. 1A are arranged. In the particulate matter detection device 100 shown in Fig. 1A and Fig. 1B, on the side of one tip of the plate-like element base material 11 which is long in one direction, the pair of measurement electrodes 12a and 12b are arranged, and via a measurement wire 16 extending from the measurement electrodes 12a and 12b, the characteristics measurement means 20 and the particulate matter amount calculation means 21 arranged in the other end of the element base material 11 are electrically connected to the measurement electrodes 12a and 12b.

The particulate matter detection device 100 of the present embodiment allows the particulate matter included in a measurement target gas to adhere to and around the pair of measurement electrodes 12a and 12b (collects the particulate matter), and the device measures a change of the electric characteristics between the pair of measurement electrodes 12a and 12b by the characteristics measurement means 20. Furthermore, it is possible to obtain the amount (e.g., a mass) of the collected particulate matter by the particulate matter amount calculation means 21 on the basis of the change amount of the electric characteristics measured by the characteristics measurement means 20. In consequence, the particulate matter detection device 100 of the present embodiment is installed and used in a through channel through which a measurement target gas such as an exhaust gas passes, whereby the particulate matter included in the measurement target gas can be detected.

Moreover, the measurement electrodes 12a and 12b constituting the pair of measurement electrodes 12 of the particulate matter detection device 100 of the present embodiment are combteeth-like electrodes each including a plurality of planarly arranged combteeth portions 13, and a comb spine portion 14 which connects the plurality of combteeth portions 13 of the measurement electrode 12a or 12b to one another at one end of each of the plurality of combteeth portions, and the combteeth portions 13 of the measurement electrodes 12a and 12b are arranged to engage with each other with a space being left therebetween. In such a constitution, it is possible to obtain a long (wide) part where the pair of measurement electrodes 12a and 12b are arranged to face each other, whereby a more accurately measured value can be obtained.

Moreover, when the combteeth-like measurement electrodes are used as described above, a space between the electrodes (especially, a space between the combteeth portions on an upstream side) can easily be narrowed, and a measurement sensitivity can be enhanced. For example, when the electric characteristics to be measured are an electrostatic capacity and the space between the electrodes is narrowed and made uniform, it is possible to accurately read a change in a case where the particulate matter adheres between the electrodes, and it is possible to enhance the measurement sensitivity of the detection device.

However, when the space between the combteeth portions is narrowed to enhance the sensitivity as described above, a period of time until a detecting portion is saturated with an adhering particulate matter shortens, and it is necessary to frequently regenerate the device. Therefore, as shown in Fig. 1A and Fig. 1B, in the particulate matter detection device 100 of the present embodiment, the plurality of combteeth portions 13 are arranged in the element base material 11 so that combteeth extend in a direction which is vertical to a flow direction G1 of the measurement target gas and a mutual space P2 between the combteeth portions 13 of the one measurement electrode 12a and the combteeth portions 13 of the other measurement electrode 12b on an outflow side 19 of the measurement target gas is larger than a mutual space P1 between the combteeth portions 13 of the one measurement electrode 12a and the combteeth portions 13 of the other measurement electrode 12b on an inflow side 18 of the measurement target gas. According to such a constitution, it is possible to enhance the mutual space and lengthen a period of time until a detecting portion is saturated with the adhering particulate matter.

That is, on the inflow side of the measurement target gas, the mutual space between the combteeth portions become comparatively narrow (a space P1), and when the particulate matter adheres on the combteeth portions, a change of electric characteristics can satisfactorily be detected. On the other hand, on the outflow side of the measurement target gas, the mutual space between the combteeth portions becomes relatively wide (the space P2), and hence it is possible to lengthen the period of time until the detecting portion is saturated with the adhering particulate matter. That is, in an initial stage in which the particulate matter is detected, detection with a high measurement sensitivity is realized in a region on the inflow side of the measurement target gas. Moreover, even if the inflow-side region is saturated with the particulate matter and the measurement sensitivity cannot easily be obtained, the detection can continuously be performed in an outflow-side region where the space between the combteeth is comparatively large. As compared with a conventional particulate matter detection device, a time interval of the regeneration of the detection device can further be lengthened.

That is, the particulate matter tends to adhere from an upstream portion (i.e., the inflow side) of the flow of the measurement target gas. In this case, a smaller amount of the particulate matter leaking and flowing from the upstream portion adheres to a downstream portion (i.e., a downstream side) than to the upstream portion, but the space between the combteeth is set to be larger than in the upstream portion. Therefore, the change of the electric characteristics cannot be grasped. Afterward, when the upstream portion is saturated with the adhering particulate matter, inflow to the downstream portion increases, but up to this time, the amount of the particulate matter adhering to the downstream portion increases owing to the particulate matter leaking and flowing from the upstream portion. Therefore, the change of the particulate matter in the downstream portion can be detected as the change of the electric characteristics. In this way, a particulate matter detection sensitivity of the downstream portion is intentionally set to be low, whereby the particulate matter can more intermittently be detected by utilizing adhering characteristics of the particulate matter.

It is to be noted that in the particulate matter detection device 100 of the present embodiment, the plurality of combteeth portions 13 are arranged so that the combteeth extend in the direction which is vertical to the flow direction G1 of the measurement target gas, but the extending direction of the combteeth is not correctly 90° (i.e., correctly vertical) with respect to the flow direction G1 of the target gas. That is, as described above, when a detecting portion constituted of engaging portions of the combteeth can shift from the inflow side to the outflow side of the measurement target gas, the extending direction of the combteeth may slightly shift from the above vertical direction. For example, the extending direction of the combteeth is preferably from about 70 to 110° with respect to the flow direction G1 of the measurement target gas.

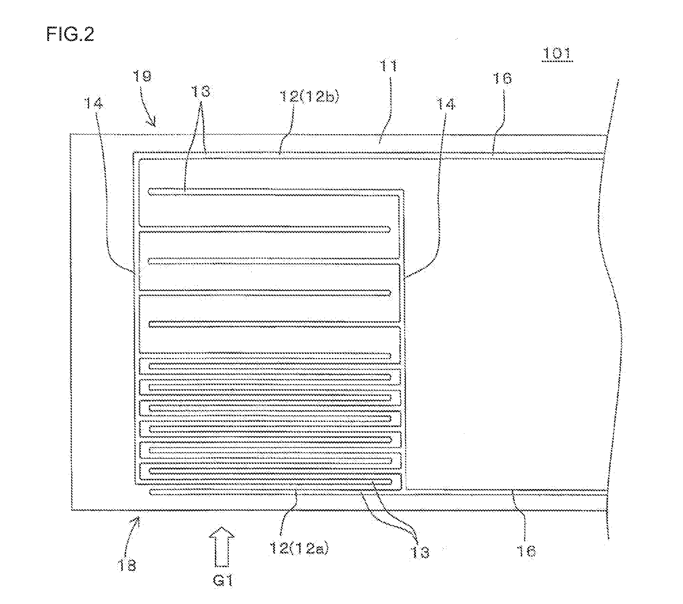

It is to be noted that in the particulate matter detection device 100 shown in Fig. 1A and Fig. 1B, there is illustrated an example where the mutual space between the combteeth portions 13 of the one measurement electrode 12a and the combteeth portions 13 of the other measurement electrode 12b gradually increases from the inflow side 18 to the outflow side 19 of the measurement target gas. However, for example, as shown in Fig. 2, from one region on the inflow side 18 of the measurement target gas to another region on the outflow side 19, the mutual space between the combteeth portions 13 of the one measurement electrode 12a and the combteeth portions 13 of the other measurement electrode 12b increases stepwise for each region in a particulate matter detection device 101. Here, Fig. 2 is an enlarged plan view showing an enlarged part where a pair of measurement electrodes are arranged in another embodiment of the particulate matter detection device of the present invention.

As shown in Fig. 1B, when the space between the combteeth portions 13 gradually increases from the inflow side 18 to the outflow side 19 of the measurement target gas, the measurement can be performed so that an actual detection surface moves from the inflow side 18 to the outflow side 19, whereby the particulate matter can more stably be detected. On the other hand, as shown in Fig. 2, when the space between the combteeth portions 13 increases stepwise from one region on the inflow side 18 to the other region on the outflow side 19 of the measurement target gas, the measurement can be performed so that the detection surface successively shifts stepwise from an initial stage in which the particulate matter is detected, whereby in the regions where the space increases stepwise, the particulate matter can be detected with a high sensitivity and a high accuracy. It is to be noted that, for example, the space between the combteeth increases stepwise in part of regions from the inflow side to the outflow side of the measurement target gas, and the space between the combteeth portions gradually increases in another region in another constitution.

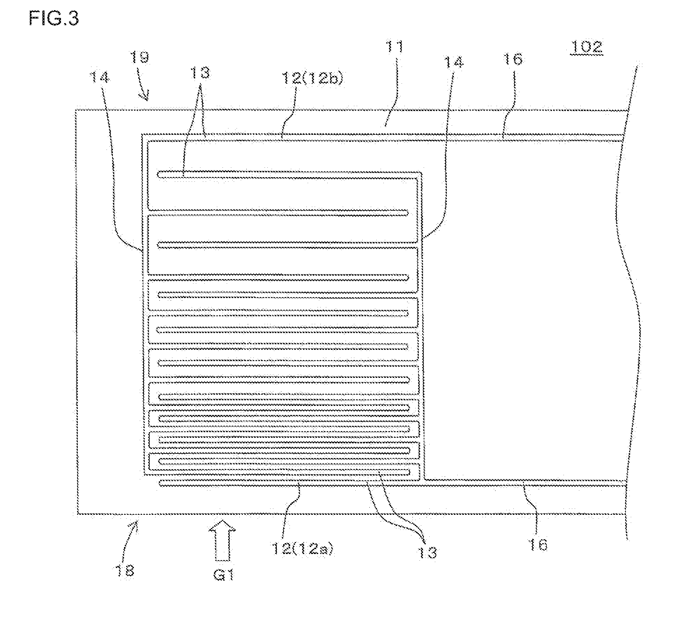

Moreover, Fig. 2 illustrates an example where the space between the combteeth portions 13 changes in two stage regions on the inflow side 18 and the outflow side 19, but the space may increase stepwise in regions of, for example, two or more stages, for example, three or four stages. For example, Fig. 3 shows an example of a particulate matter detection device 102 in which a space between combteeth portions 13 increases in regions of three stages from the inflow side 18 to the outflow side 19 of the measurement target gas. Here, Fig. 3 is an enlarged plan view showing an enlarged part where a pair of measurement electrodes are arranged in still another embodiment of the particulate matter detection device of the present invention.

Moreover, in the particulate matter detection device of the present embodiment, for example, as shown in Fig. 1A and Fig. 1B, the mutual space P2 between the combteeth portions 13 of the one measurement electrode 12a and the combteeth portions 13 of the other measurement electrode 12b on the outflow side 19 of the measurement target gas is preferably from 1.5 to 10 times, further preferably from twice to 5 times, and especially preferably from twice to three times as much as the mutual space P1 between the combteeth portions 13 of the one measurement electrode 12a and the combteeth portions 13 of the other measurement electrode 12b on the inflow side 18 of the measurement target gas.

According to such a constitution, after the region on the inflow side 18 is saturated, a region other than the region on the inflow side 18 can satisfactorily be used as the detection surface. That is, the detection surface can satisfactorily be shifted toward the outflow side 19. It is to be noted that, for example, when the space P2 between the combteeth portions 13 on the outflow side 19 is less than 1.5 times as much as the space P1 between the combteeth portions 13 on the inflow side 18, a difference between the inflow side 18 and the outflow side 19 is small, and the whole detection surface is comparatively equally saturated. When the space P2 exceeds ten times, the difference in the space between the combteeth portions (i.e., the difference between the inflow side 18 and the outflow side 19) becomes excessively large, and it might be difficult to smoothly shift the detection surface from the inflow side 18 to the outflow side 19.

Furthermore, in the particulate matter detection device of the present embodiment, the comb spine portion of at least one of the measurement electrodes may be covered with a comb spine covering portion made of a dielectric material. In this way, when the comb spine portion of at least one of the measurement electrodes is covered with the comb spine covering portion made of the dielectric material, a portion covered with the comb spine covering portion is excluded from a substantial detection surface, and the particulate matter can more satisfactorily be detected.

That is, in the particulate matter detection device of the present embodiment, the mutual space between the combteeth portions on the outflow side is larger than that on the inflow side in the flow direction of the measurement target gas, but from the viewpoint of the enhancement of the measurement accuracy, the mutual space between the pair of measurement electrodes is preferably predetermined to a certain degree in each region in a direction which is vertical to the flow direction of the measurement target gas (i.e., this inflow-side region in a case where the inflow side of the measurement target gas is mainly used as the detection surface in the initial measurement stage). However, a space between portions where the combteeth portions engage with the comb spine portion is different from the space between the combteeth portions, whereby owing to the comb spine portion (more specifically, gaps among the comb spine portion and the combteeth portions), the measurement accuracy of the detection device might relatively deteriorate.

Therefore, the comb spine portion which might be the above factor for deteriorating the measurement accuracy is covered to exclude the portion from the detection surface, whereby while producing the effect of the present invention, the measurement accuracy can further be enhanced. Moreover, when such comb spine covering portions are arranged for the comb spine portions of both the measurement electrodes, a through channel of the measurement target gas can be formed between the two comb spine covering portions, and a satisfactory gas flow can be realized.

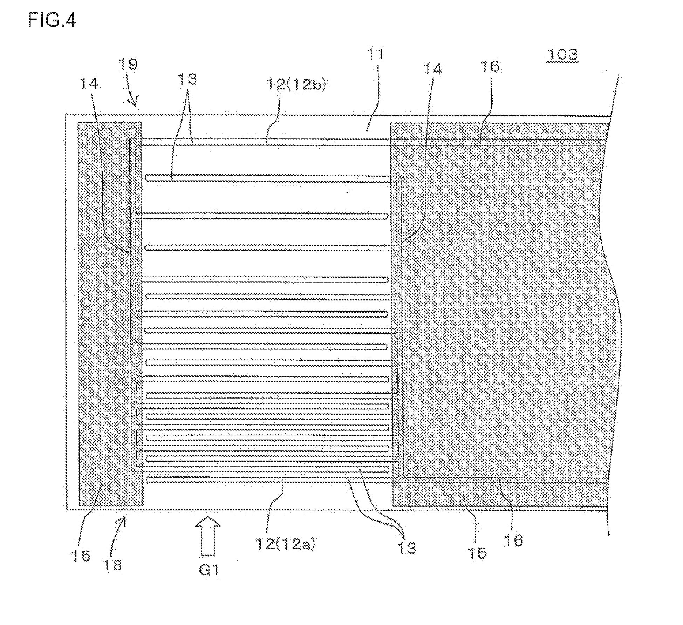

For example, a particulate matter detection device 103 shown in Fig. 4 shows an example where the comb spine portion 14 of the one measurement electrode 12 is covered with the comb spine covering portion 15 made of a dielectric material. In the particulate matter detection device 103, gaps among the comb spine portion 14 of the one measurement electrode 12 and the combteeth portions 13 of the other measurement electrode 12 where the mutual space between the pair of measurement electrodes 12 becomes nonuniform are hidden by the comb spine covering portion 15, and a part where the space between the electrodes is narrow and the combteeth portions 13 are engaged can effectively be utilized as the detection surface. Here, Fig. 4 is an enlarged plan view showing an enlarged part where a pair of measurement electrodes are arranged in a further embodiment of the particulate matter detection device of the present invention.

It is to be noted that the comb spine covering portion may cover the comb spine portion of at least one measurement electrode, but the comb spine covering portion, for example, preferably covers the comb spine portion 14 of the one measurement electrode (e.g., the measurement electrode 12a) as well as tip portions of the combteeth portions 13 of the other measurement electrode (e.g., the measurement electrode 12b) arranged to engaged with each other with a space being left therebetween. Moreover, the comb spine covering portion 15 may cover the comb spine portion 14 of the one measurement electrode 12a so as to abut on the tip portions of the combteeth portions 13 of the other measurement electrode 12b arranged to engage with each other with the space being left therebetween. According to such a constitution, when the detection surface is virtually divided with respect to the flow direction of the measurement target gas, the comb spine portion which makes the space between the measurement electrodes noticeably nonuniform is covered with the comb spine covering portion. Therefore, in the respective regions (i.e., the above virtually divided regions), the space between the combteeth portions becomes even, which enables the measurement with a high accuracy.

The comb spine covering portion is a film made of a dielectric material having such a thickness that the covered comb spine portion can substantially be excluded from the detection surface. That is, the comb spine covering portion is preferably such a film that when the particulate matter adheres to the surface of the comb spine covering portion, in the comb spine portion constituting part of the pair of measurement electrodes, any change does not occur in electric characteristics measured in accordance with the adhering particulate matter, or even if the change of the electric characteristics is detected, a change amount is noticeably small, and a measured value is hardly influenced. The change is, for example, 0.1% or less of the whole change amount of the electric characteristics.

There is not any special restriction on a material of the comb spine covering portion made of the dielectric material, but the material is preferably at least one selected from the group consisting of, for example, alumina, cordierite, mullite, glass, zirconia, magnesia and titania. Among the materials, alumina can preferably be used.

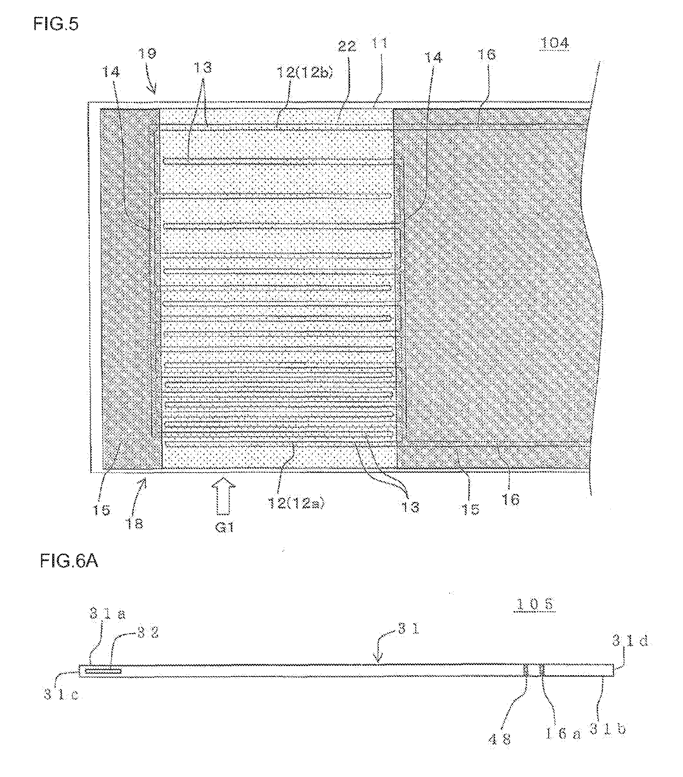

Moreover, in the particulate matter detection device of the present embodiment, at least part of the surfaces of the pair of measurement electrodes may be covered with an electrode protective film made of a dielectric material having a smaller thickness than the comb spine covering portion. According to such a constitution, the corrosion of the measurement electrodes can satisfactorily be prevented. For example, a particulate matter detection device 104 shown in Fig. 5 illustrates an example where the surfaces of the pair of measurement electrodes 12a and 12b are covered with an electrode protective film 22 made of a dielectric material. Here, Fig. 5 is an enlarged plan view showing an enlarged part where a pair of measurement electrodes are arranged in a further embodiment of the particulate matter detection device of the present invention.

The electrode protective film 22 is a protective film having such a thickness that the change of the electric characteristics measured between the pair of covered measurement electrodes 12a and 12b can be read, to protect the pair of measurement electrodes, when the particulate matter adheres to the surface of the film. There is not any special restriction on the thickness of the electrode protective film 22, as long as the film is thinner than the above comb spine covering portion, but the thickness is, for example, preferably from 5 to 200 µm, further preferably from 10 to 100 µm, and especially preferably from 20 to 50 µm. For example, it is difficult to prepare a protective film having a thickness which is less than 5 µm, and a function of the protective film cannot sufficiently be performed. On the other hand, if the thickness exceeds 200 µm, the protective film is excessively thick, whereby a measurement sensitivity might deteriorate owing to the protective film. It is to be noted that the pair of measurement electrodes are arranged in the element base material, whereby the electrode protective film may be formed by the element base material which covers the surfaces of the pair of measurement electrodes.

There is not any special restriction on such an electrode protective film, but the film can be formed by using at least one selected from the group consisting of, for example, alumina, cordierite, mullite, glass, zirconia, magnesia and titania.

Moreover, the above electrode protective film or the comb spine covering portion can be formed by using a ceramic green sheet obtained by forming the above ceramic material into a tape-like shape. For example, the ceramic green sheet is formed into such a shape as to cover the comb spine portions of the measurement electrodes, and this ceramic green sheet is disposed on the surfaces of the pair of measurement electrodes arranged to face each other, whereby the comb spine covering portion having a specific shape can be formed.

Moreover, as the particulate matter detection device described above, there has been illustrated an example where the pair of measurement electrodes are arranged on one surface of the element base material which is long in one direction, but the shape of the element base material is not limited to the above shape, as long as the pair of measurement electrodes are arranged on the surface of or in the element base material and the part where the pair of measurement electrodes are arranged is installed in the through channel of the measurement target gas to enable the detecting of the particulate matter.

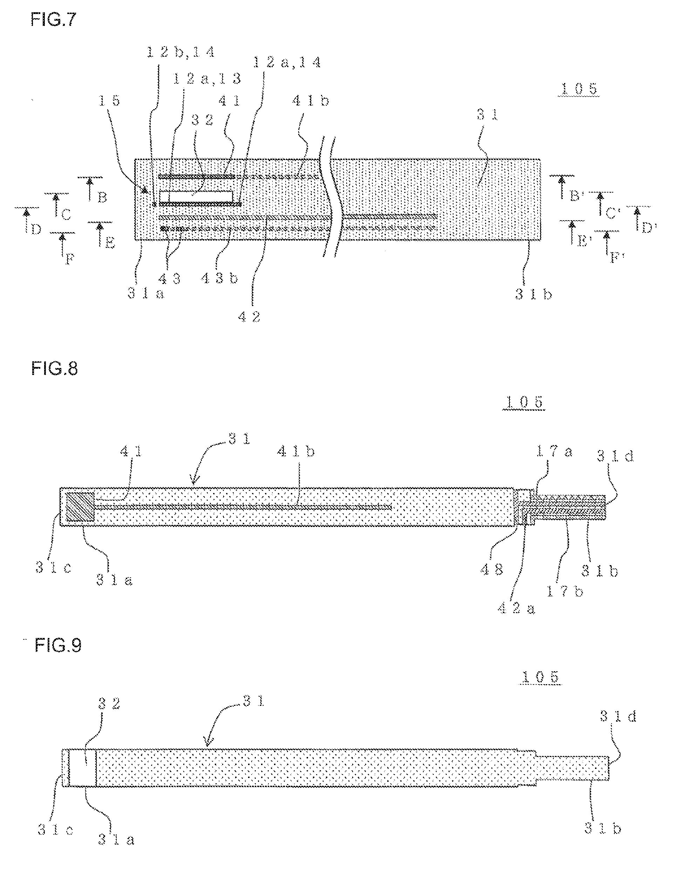

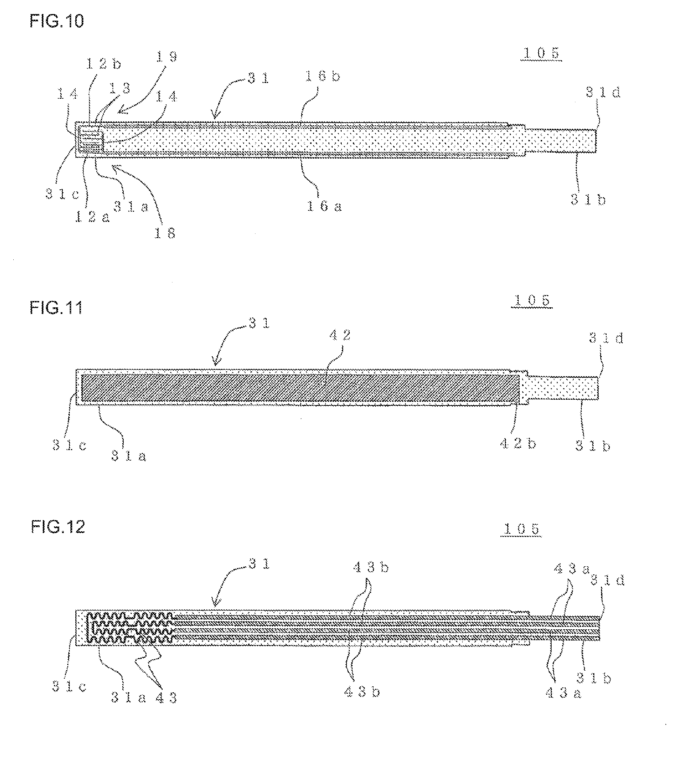

For example, as shown in Fig. 6A to Fig. 6C and Fig. 7, the element base material may be a device main body 31 (the element base material) which includes at least a through hole (hollow) 32 formed in one end 31a thereof and which is long in one direction. When the device main body 31 is used, a pair of measurement electrodes 12a and 12b are arranged on the inner side surface of one wall which forms the through hole 32 or in the wall. In this case, as shown in Fig. 10, the pair of measurement electrodes 12a and 12b have a constitution in which the mutual space between the combteeth portions 13 of the one measurement electrode 12a and the combteeth portions 13 of the other measurement electrode 12b on the outflow side of the measurement target gas (i.e., an outlet side of the through hole 32) is larger than the mutual space between the combteeth portions 13 of the one measurement electrode 12a and the combteeth portions 13 of the other measurement electrode 12b on the inflow side of the measurement target gas (i.e., on an inlet side of the through hole 32 (see Fig. 6A)).

In a particulate matter detection device 105 shown in Fig. 6A to Fig. 6C and Fig. 7, a particulate matter included in a gas flowing into the through hole 32 is electrically adsorbed by the wall surface of the through hole 32, and by the pair of measurement electrodes 12a and 12b, a change of electric characteristics of the wall which forms the through hole 32 is measured, whereby it is possible to detect a mass of the particulate matter adsorbed by the wall surface of the through hole 32. In consequence, the particulate matter detection device 105 of the present embodiment allows the exhaust gas or the like to pass through the through hole 32, and can detect the particulate matter included in the exhaust gas.

The particulate matter detection device 105 does not directly measure all the particulate matter included in the exhaust gas flowing through a downstream side of a DPF or the like, but measures the particulate matter which has flowed into the through hole 32, whereby it is possible to roughly calculate the amount of the particulate matter of the whole exhaust gas on the basis of this measured value. In consequence, it is possible to measure a micro amount of the particulate matter, which cannot be detected by a conventional inspection method.

Moreover, the particulate matter detection device 105 does not measure the total amount of the exhaust gas as described above, and hence the particulate matter detection device 105 can be miniaturized and installed in a narrow space. Furthermore, with such miniaturization, the particulate matter detection device 105 can inexpensively be manufactured.

Moreover, when the total flow rate of the exhaust gas flowing through the downstream side of the DPF or the like is a high flow rate, only part of the exhaust gas (i.e., the particulate matter included in the exhaust gas) is introduced into the through hole 32. Therefore, the particulate matter in the through hole 32 can effectively be charged, and a measured value having less error can be obtained.

It is to be noted that as shown in Fig. 7 to Fig. 12, the particulate matter detection device 105 includes, in the wall which forms the through hole 32, at least a pair of dust collection electrodes 41 and 42 embedded outside a position where the pair of measurement electrodes 12a and 12b are embedded in the walls which form the through hole 32. When a voltage is applied to the dust collection electrodes 41 and 42, the particulate matter included in the gas flowing into the through hole 32 can electrically be adsorbed by the wall surface of the through hole 32.

Moreover, from the pair of measurement electrodes 12a and 12b, a pair of measurement wires 16a and 16b are extended toward the other end 31b of the device main body 31, and electrically connected to a pair of measurement lead terminals 17a and 17b. Moreover, the pair of dust collection electrodes 41 and 42 are electrically connected to dust collection lead terminals 41a and 42a via dust collection wires 41b and 42b. It is to be noted that the particulate matter detection device 105 shown in Fig. 6A to Fig. 12 is electrically connected to characteristics measurement means and particulate matter amount calculation means (not shown) from the above lead terminals via wires, to detect the particulate matter in accordance with the electric characteristics measured by the pair of measurement electrodes 12a and 12b.

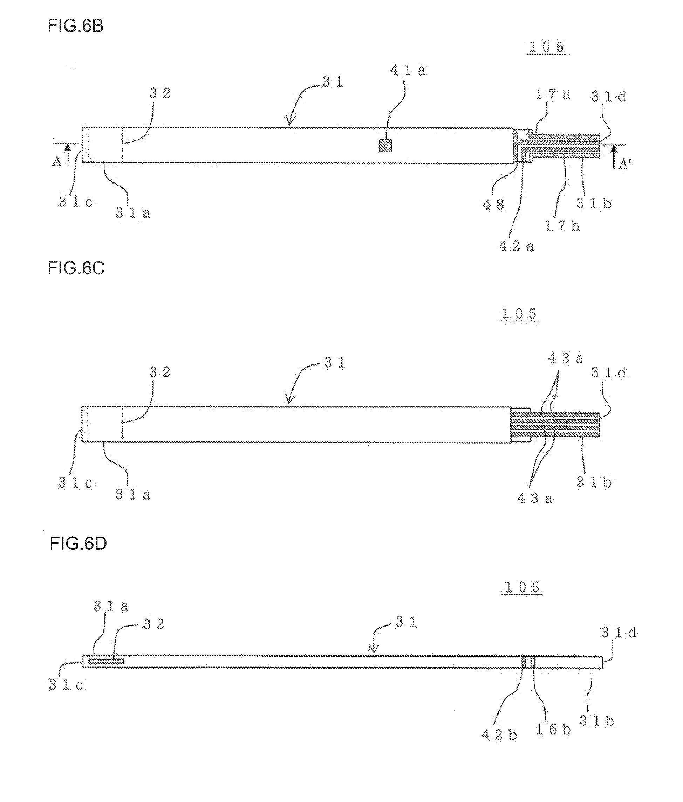

Here, Fig. 6A is a front view schematically showing a still further embodiment of the particulate matter detection device of the present invention, Fig. 6B is a side view showing one side surface of the particulate matter detection device shown in Fig. 6A, Fig. 6C is a side view showing the other side surface of the particulate matter detection device shown in Fig. 6A, and Fig. 6D is a back view of the particulate matter detection device shown in Fig. 6A. Moreover, Fig. 7 is an exemplary diagram showing a section cut along the A-A' line of Fig. 6B. Furthermore, Fig. 8 is an exemplary diagram showing a section cut along the B-B' line of Fig. 7, Fig. 9 is an exemplary diagram showing a section cut along the C-C' line of Fig. 7, Fig. 10 is an exemplary diagram showing a section cut along the D-D' line of Fig. 7, Fig. 11 is an exemplary diagram showing a section cut along the E-E' line of Fig. 7, and Fig. 12 is an exemplary diagram showing a section cut along the F-F' line of Fig. 7.

As shown in Fig. 7 and Fig. 10, in the particulate matter detection device 105 of the present embodiment, the pair of measurement electrodes 12a and 12b are preferably arranged so that a direction in which combteeth of combteeth portions 13 of the measurement electrodes 12a and 12b extend is orthogonal to a direction in which the through hole 32 extends through the device. Furthermore, the comb spine portions 14 of the pair of measurement electrodes 12a and 12b are arranged to extend to a position where a wall rising from the wall provided with combteeth portions 13 is disposed, among the walls which form the through hole 32. That is, the comb spine portion 14 connecting the combteeth portions 13 extends outside a position where the through hole 32 is formed in a direction in which the combteeth of the combteeth portions 13 extend, and in the through hole 32, the only combteeth portions 13 are arranged

According to such a constitution, the above comb spine covering portion which covers the comb spine portion (the comb spine covering portion 15 in Fig. 7) is formed by the wall which forms the through hole 32 (specifically, the wall extending upwardly from the wall provided with the combteeth portion 13), and more accurate measurement can be performed.

Hereinafter, the particulate matter detection device 105 shown in Fig. 6A to Fig. 12 will be described as an example of the particulate matter detection device of the present embodiment in more detail.

### [2] Constitution of Particulate Matter Detection Device:

A particulate matter detection device 105 shown in Fig. 6A to Fig. 6D and Fig. 7 to Fig. 12 includes a device main body 31 (an element base material) which includes at least one through hole (hollow) 32 formed in one end 31a and which is long in one direction; at least a pair of measurement electrodes 12a and 12b arranged on the inner side surface of one wall which forms the through hole 32 or in the wall; and at least a pair of dust collection electrodes 41 and 42 embedded in walls which form the through hole 32 and which face each other, embedded outside a position where the pair of measurement electrodes 12a and 12b are embedded in the walls which form the through hole 32, and covered with a dielectric material, to detect a particulate matter included in an exhaust gas by the particulate matter detection device 105. It is to be noted that when an electric field is generated in the through hole by the above dust collection electrodes, the particulate matter included in the gas passing through the through hole can be adsorbed by the wall surfaces of the walls which form the through hole. Moreover, the particulate matter detection device 105 further includes a heating portion 43 for burning and removing the particulate matter adhering to the device.

### [2-1] Device Main Body (Element Base Material):

The device main body is a part which includes at least one through hole formed in one end and which is long in one direction to become a base body of a particulate matter detection device. The device main body is made of a dielectric material, and in walls which form this through hole and which face each other, at least a pair of dust collection electrodes are arranged, respectively. When a voltage is applied to this pair of dust collection electrodes, an electric field can be generated in the through hole.

The dielectric material constituting the device main body is preferably at least one selected from the group consisting of, for example, alumina, cordierite, mullite, glass, zirconia, magnesia and titania. Among the materials, alumina can preferably be used. When the dust collection electrodes are embedded in the device main body made of such a dielectric material, the dust collection electrodes covered with the dielectric material can be formed. Therefore, the particulate matter detection device has an excellent thermal resistance, dielectric breakdown resisting properties and the like. Here, "the dielectric material" is a substance which is excellent in dielectric properties rather than in conductivity and which behaves as an insulator against a direct-current voltage.

It is to be noted that "the one end of the device main body" is a region from one tip portion 31c of the device main body to a position corresponding to a length which is 50% of the total length of the device main body 31. Moreover, "the other end of the device main body" is a region from the other tip portion 31d of the device main body to a position corresponding to a length which is 50% of the total length of the device main body 31. It is to be noted that the one end of the device main body is preferably a region from the one tip portion 31c of the device main body to a position corresponding to a length which is preferably 40%, and further preferably 30% of the total length of the device main body 31. Moreover, the other end of the device main body is a region from the other tip portion 31d of the device main body to a position corresponding to a length which is preferably 40%, and further preferably 30% of the total length of the device main body 31. A position between the one end 31a and the other end 31b of the device main body 31 is a portion obtained by excluding the above regions of the one end 31a and the other end 31b from the device main body 31 (see Fig. 6A to Fig. 6D).

In the particulate matter detection device 105 shown in Fig. 6A to Fig. 6D, the device main body 31 is formed to be long in one direction, and there is not any special restriction on the length of the body in a longitudinal direction thereof, but the device main body preferably has such a length that the particulate matter in the exhaust gas can efficiently be sampled when the main body is inserted into an exhaust gas pipe.

Moreover, there is not any special restriction on a thickness of the device main body 31 (a length thereof in a direction (a thickness direction) which is vertical both to "the longitudinal direction of the device main body" and "a gas circulating direction"), but the length is, for example, preferably from about 0.5 to 3 mm. Here, "the thickness of the device main body 31" is the thickness of the thickest portion of the device main body in the above thickness direction. Moreover, there is not any special restriction on the length of the device main body 31 in the circulating direction when the gas circulates through the through hole 32 (the length of the device main body in the gas circulating direction), but the length is, for example, preferably from about 2 to 20 mm. Furthermore, the length of the device main body 31 in the longitudinal direction is preferably from 10 to 100 times as much as the thickness of the device main body 31, and preferably from 3 to 10 times as much as the length of the device main body 31 in the gas circulating direction.

As to a shape of the device main body 31, as shown in Fig. 6A to Fig. 6D, a sectional shape which is orthogonal to the longitudinal direction may be a rectangular plate-like shape, or the sectional shape may be a round rod-like shape, an elliptic rod-like shape or the like (not shown). Moreover, the device main body may have another shape as long as the shape is long in one direction.

In the particulate matter detection device 105, there is not any special restriction on a shape and a size of the through hole 32, as long as the exhaust gas is allowed to pass through the through hole and the amount of the particulate matter can be measured. For example, a length of the through hole 32 in the longitudinal direction of the detection device main body is preferably from about 2 to 20 mm. Moreover, a width of a portion of the through hole 32 sandwiched between the dust collection electrodes 41 and 42 (the length of the through hole in the direction which is vertical both to the longitudinal direction of the detection device main body and the gas circulating direction) is preferably from about 3 to 30 mm.

It is to be noted that when the size of the through hole 32 is set to the above range, the exhaust gas including the particulate matter can sufficiently be circulated through the through hole 32, and further by the electric field generated by the dust collection electrodes 41 and 42, the particulate matter can effectively be adsorbed in the through hole 32.

The device main body 31 is preferably obtained by laminating a plurality of tape-like ceramic materials (ceramic sheets). In consequence, the particulate matter detection device can be prepared by laminating the plurality of tape-like ceramic materials while sandwiching electrodes, wires and the like among the materials, whereby the particulate matter detection device can efficiently be manufactured.

### [2-2] Measurement Electrode:

At least a pair of measurement electrodes are arranged on the inner side surface of one wall which forms a through hole or in the wall, to detect a particulate matter included in an exhaust gas passing through an exhaust gas system, on the basis of a change of electric characteristics of the wall which forms the through hole, generated when the particulate matter is electrically adsorbed by the wall surface of the through hole through dust collection electrodes.

A pair of measurement electrodes 12a and 12b for use in a particulate matter detection device 105 of the present embodiment are combteeth-like electrodes each including a plurality of planarly arranged combteeth portions 13, and a comb spine portion 14 which connects the plurality of combteeth portions 13 of the measurement electrode 12a or 12b to one another at one end of each of the plurality of combteeth portions, and the combteeth portions 13 of the measurement electrodes 12a and 12b are arranged to engage with each other with a space being left therebetween.

Furthermore, the pair of measurement electrodes 12a and 12b for use in the particulate matter detection device 105 of the present embodiment have a constitution in which the mutual space between the combteeth portions 13 of the one measurement electrode 12a and the combteeth portions 13 of the other measurement electrode 12b on the outflow side 19 of the measurement target gas (i.e., an outlet side of the through hole 32) is larger than the mutual space between the combteeth portions 13 of the one measurement electrode 12a and the combteeth portions 13 of the other measurement electrode 12b on the inflow side 18 of the measurement target gas (i.e., on an inlet side of the through hole 32). It is to be noted that the space between the combteeth portion 13 may increase stepwise for each region from one region on the inflow side to the other region on the outflow side, or may gradually increase from the inflow side to the outflow side.

There is not any special restriction on a thickness of the measurement electrode (the combteeth portions 13 and the comb spine portion 14), but the thickness is, for example, preferably from 5 to 30 µm. Moreover, examples of a material of the measurement electrode include platinum (Pt), molybdenum (Mo) and tungsten (W).

There is not any special restriction on a width of each of the combteeth portions constituting the measurement electrode, but the width is, for example, preferably from 30 to 400 µm, further preferably from 50 to 300 µm, and especially preferably from 80 to 250 µm. Moreover, there is not any special restriction on the number of the combteeth portions arranged in each measurement electrode, but the number is, for example, preferably at least 3 or more, further preferably from 3 to 20, and especially preferably from 4 to 8. According to such a constitution, the particulate matter can more accurately be detected.

A space between the combteeth portions of one of adjacent measurement electrodes and the combteeth portions of the other measurement electrode (i.e., a space where the combteeth portions are arranged to engage with each other) is, for example, preferably from 30 to 300 µm, further preferably from 40 to 200 µm, and especially preferably from 80 to 150 µm as the narrowest space on the inflow side. On the other hand, the largest space on the outflow side is preferably from 50 to 1500 µm, further preferably from 80 to 1000 µm, and especially preferably from 150 to 500 µm. According to such a constitution, the detection surface can satisfactorily successively be shifted in the flow direction of the measurement target gas, and it is possible to lengthen a period of time until the detecting portion is saturated with the adhering particulate matter.

Moreover, the pair of measurement electrodes 12a and 12b of the particulate matter detection device 105 include measurement lead terminals 17a and 17b (hereinafter referred to simply as "the lead terminals 17a and 17b" sometimes) in the other end 31b of a device main body 31 via measurement wires 16a and 16b. The measurement lead terminals 17a and 17b are electrically connected to characteristics measurement means 20 and particulate matter amount calculation means 21 (see Fig. 1A), and the particulate matter is detected on the basis of a change of electric characteristics measured by the pair of measurement electrodes 12a and 12b.

It is to be noted that when the lead terminals 17a and 17b of the pair of measurement electrodes 12a and 12b are arranged in the other end 31b of the device main body 31 in this manner, it is possible to obtain large spaces among a portion provided with a through hole 32 (i.e., one end 31a) and the lead terminals 17a and 17b. Therefore, the only one end 31a provided with the through hole 32 and the like is inserted into a pipe through which a high-temperature exhaust gas circulates, and the other end 31b side provided with the lead terminals 17a and 17b can be extended outwardly from the pipe. When temperatures of the lead terminals 17a and 17b are set to be high, a detection accuracy of the particulate matter lowers, and it becomes difficult to perform stable detection. When the terminals are used for a long period of time, a contact defect among electric terminals and a harness connected to the outside is generated, and measurement might not be performed. The lead terminals 17a and 17b are extended outwardly from the pipe, and are not exposed to the high temperature, whereby the particulate matter can accurately and stably be detected.

As shown in Fig. 6B, the lead terminals 17a and 17b arranged in the other end 31b of the device main body 31 are preferably arranged on the side surface of the other end 31b of the device main body 31, to extend in a longitudinal direction. It is to be noted that in Fig. 6B, a width of the other end 31b of the device main body 31 becomes narrow, but the width of the other end 31b may be narrowed in this manner or does not have to be narrowed. There is not any special restriction on a shape and a size of the lead terminals 17a and 17b, but each lead terminal preferably has a strip-like shape with a width from 0.1 to 2.0 mm and a length from 0.5 to 20 mm. Examples of a material of the lead terminals 17a and 17b include nickel (Ni), platinum (Pt), chromium (Cr), tungsten (W), molybdenum (Mo), aluminum (Al), gold (Au), silver (Ag) and copper (Cu).

### [2-3] Dust Collection Electrode:

Dust collection electrodes are embedded in walls which form a through hole and which face each other, embedded outside a position where the above pair of measurement electrodes are embedded in the walls which form the through hole, and covered with a dielectric material constituting a device main body. When a predetermined voltage is applied across dust collection electrodes 41 and 42, an electric field can be generated in the through hole 32.

There is not any special restriction on a shape of the dust collection electrodes, as long as the electrodes are embedded in the walls which form the through hole and an electric field can be generated in the through hole 32. In the particulate matter detection device 105 of the present embodiment, as shown in Fig. 8, one of the dust collection electrodes is the high-voltage dust collection electrode 41 disposed in a wall in which a pair of measurement electrodes 12a and 12b are arranged and in a wall on an opposite side from the through hole 32 (see Fig. 7), and a high voltage is applied to the electrode. Moreover, as shown in Fig. 11, the other dust collection electrode is the grounded ground dust collection electrode 42 disposed in the wall on the same side as the wall in which the pair of measurement electrodes 12a and 12b are arranged (see Fig. 7). There is not any special restriction on a thickness of each dust collection electrode, but the thickness is, for example, preferably from 5 µm to 30 µm. Moreover, examples of a material of the dust collection electrode include platinum (Pt), molybdenum (Mo), and tungsten (W).

There is not any special restriction on a shape and a size of the dust collection electrodes 41 and 42, as long as the electric field can be generated in the through hole 32. Examples of the shape include a rectangular shape, a round shape, and an oblong shape. Moreover, as to the size of the dust collection electrodes 41 and 42, an area thereof is, for example, preferably 70% or more of that of the through hole 32 as seen from the side surface.

For example, Fig. 8 shows an example where the high-voltage dust collection electrode 41 is formed in almost the same size as the through hole. The high-voltage dust collection electrode 41 is connected to a dust collection wire 41b (hereinafter referred to simply as "the wire" sometimes) extending in a longitudinal direction of a device main body 31, and a tip portion (a tip on a side which is not connected to the electrode 41) of the wire 41b is interlayer-connected (via-connected) to a dust collection lead terminal 41a (hereinafter referred to simply as "the lead terminal" sometimes) shown in Fig. 6B. There is not any special restriction on a width of the wire 41b, but the width is, for example, preferably from about 0.2 to 1 mm. Moreover, there is not any special restriction on a thickness of the wire 41b, but the thickness is, for example, preferably from about 5 to 30 µm. Furthermore, examples of a material of the wire 41b include platinum (Pt), molybdenum (Mo), and tungsten (W).

It is to be noted that both lead terminals of the pair of dust collection electrodes may be arranged in the other end of the device main body. As shown in Fig. 6A to Fig. 6D, however, a lead terminal 42a (a dust collection lead terminal) of the grounded dust collection electrode (the ground dust collection electrode 42) is preferably disposed in the other end 31b of the device main body 31, and the lead terminal 41a of the high-voltage dust collection electrode 41 is preferably disposed at a position between the one end 31a and the other end 31b of the device main body 31. In consequence, the lead terminal 42a of the ground dust collection electrode 42 and the lead terminal 41a of the high-voltage dust collection electrode 41 can be arranged with a space being left therebetween. Therefore, when a voltage is applied between the lead terminal 41a and the lead terminal 42a to apply the voltage between the pair of dust collection electrodes 41 and 42, surface discharge can effectively be prevented from occurring on the surface of the device main body 31.

In the particulate matter detection device 105, a distance between the lead terminal 41a and the lead terminal 42a is preferably from 5 to 100 mm, and further preferably from 10 to 70 mm. If the distance is smaller than 5 mm, short-circuit due to the surface discharge might easily occur. On the other hand, if the distance is larger than 100 mm and the device main body 31 of the particulate matter detection device 105 is attached to a pipe or the like so that the lead terminal 41a is positioned outside the pipe, a portion of the device main body 31 projecting outwardly from the pipe becomes excessively long, and it might become difficult to attach the device main body 31 to a narrow space.

Moreover, a distance from the lead terminal 41a disposed at the position between the one end 31a and the other end 31b of the device main body 31 to the through hole 32 is preferably 10 mm or more, and further preferably 20 mm or more. If the distance is smaller than 10 mm and the particulate matter detection device 105 is attached to the pipe so as to insert the portion of the through hole 32 into the pipe, heat of a high-temperature exhaust gas circulating through the pipe might easily affect the lead terminal 41a.

There is not any special restriction on a shape and a size of the lead terminal 41a of the high-voltage dust collection electrode 41. The lead terminal preferably has a polygonal shape such as a quadrangular shape having a width of 0.5 to 3 mm and a length of 0.5 to 3 mm, but the shape may be another shape such as a round shape, an elliptic shape or a race track shape. Examples of a material of the lead terminal 41a include nickel (Ni), platinum (Pt), chromium (Cr), tungsten (W), molybdenum (Mo), aluminum (Al), gold (Au), silver (Ag), copper (Cu), stainless steel, and Kovar.

A distance between the high-voltage dust collection electrode 41 and the through hole 32 and a distance between the ground dust collection electrode 42 and the through hole 32 are preferably from 50 to 500 µm, and further preferably from 100 to 300 µm. In such a range, the electric field can effectively be generated in the through hole. The distance between the dust collection electrode 41 or 42 and the through hole 32 is a thickness of a portion of a dielectric material covering each dust collection electrode 41 or 42 which faces the through hole 32.

Conditions of the electric field generated by the dust collection electrodes vary in accordance with a gap (a distance between the pair of dust collection electrodes), or a gas temperature, but are preferably from 50 to 200 kV/cm.

The particulate matter detection device 105 allows the particulate matter included in a fluid (i.e., the exhaust gas) flowing into the through hole 32 to be electrically adsorbed by the wall surface of the through hole 32, and reads a change of electric characteristics due to the adsorption of the particulate matter to detect the particulate matter included in the exhaust gas. When the particulate matter in the exhaust gas is already charged before flowing into the through hole 32, the particulate matter is adsorbed by the electric field generated in the through hole 32. On the other hand, if the particulate matter is not charged, the particulate matter is charged with the electric field generated in the through hole 32, and the charged particulate matter is electrically adsorbed by the wall surface of the through hole 32.

### [2-4] Characteristics Measurement Means and Particulate Matter Amount Calculation Means:

Characteristics measurement means and particulate matter amount calculation means are used to detect electric characteristics between a pair of measurement electrodes. Specifically, when the electric characteristics to be measured are, for example, an electrostatic capacity, an LCR meter 4263B manufactured by Agilent Technologies Inc. or the like can be used. It is to be noted that as the characteristics measurement means and the particulate matter amount calculation means, it is possible to use means for use in a heretofore known particulate matter detection device which measures electric characteristics between a pair of electrodes to detect a particulate matter.

A particulate matter detection device 105 shown in Fig. 6A to Fig. 6D has a constitution in which lead terminals of measurement electrodes 12a and 12b are electrically connected to characteristics measurement means 20 and particulate matter amount calculation means 21 (see Fig. 1A), whereby electric characteristics of the measurement electrodes 12a and 12b can be detected.

### [2-5] Heating Portion:

A particulate matter detection device 105 shown in Fig. 7 and Fig. 12 includes a heating portion 43 which is disposed (embedded) in a device main body 31 so as to extend along a wall surface of a through hole 32 (the wall surface which is parallel to the side surface of the device main body 31). When the device is heated by the heating portion 43, a particulate matter adsorbed by walls forming the through hole 32 can be heated and oxidized (i.e., the device can be regenerated). Moreover, during measurement of a mass of the particulate matter or the like, an internal space of the through hole 32 is adjusted at a desirable temperature, and the temperature can be regulated so as to stably measure a change of electric characteristics of the walls which form the through hole 32.

The heating portion 43 may have a wide film-like shape, but as shown in Fig. 12, a linear metal material may be disposed in a wave-like shape so that a tip portion thereof is U-turned. According to such a shape, the inside of the through hole can uniformly be heated, and the particulate matter adhering to the device main body 31 or a pair of measurement electrodes 12a and 12b can be removed.

Examples of a material of the heating portion 43 include platinum (Pt), molybdenum (Mo), and tungsten (W). The heating portion 43 is preferably embedded in the device main body 31 so as to extend along the wall surface of the through hole 32, but as shown in Fig. 12, the heating portion may be formed to extend along a position provided with the through hole 32 and also to the other end 31b side of the device main body 31. In consequence, there are advantages that a temperature difference between the inside of the through hole and the periphery of the through hole can be decreased. Even if rapid heating is performed, the breakdown of the element (the detection device main body) advantageously does not easily occur. The heating portion can preferably raise the temperature of the internal space of the through hole up to 650°C.

Moreover, Fig. 12 illustrates an example where two heating portions 43 are formed by two wires, but one heating portion may be disposed, or three or more heating portions may be arranged. Furthermore, although not shown, the heating portions may be arranged on both side walls which form the through hole. That is, the arrangement and number of the heating portions can be set to those required for achieving objects such as the oxidizing and removing of the collected particulate matter or temperature adjustment.

Furthermore, the heating portions 43 shown in Fig. 12 are connected to heating wires 43b (hereinafter referred to simply as "the wires 43b" sometimes), and the wires 43b are interlayer-connected to lead terminals 43a (heating lead terminals), respectively, as shown in Fig. 12. The lead terminals 43a of the heating portions 43 are preferably arranged in the other end 31b of the device main body 31 in the same manner as in the lead terminals 17a and 17b of the measurement electrodes 12a and 12b, to avoid the influence of the heat when the one end 31a side of the device main body 31 is heated. In Fig. 12, four lead terminals 43a are arranged side by side in the other side surface of the device main body 31, but the arrangement of the lead terminals 43a is not limited to such arrangement.

### [3] Manufacturing Method of Particulate Matter Detection Device:

Next, a method of manufacturing the particulate matter detection device 105 shown in Fig. 6A to Fig. 6D will be described as an example of a manufacturing method of the particulate matter detection device of the present embodiment. It is to be noted that the method of manufacturing the particulate matter detection device of the present invention is not limited to the following manufacturing method.

### [3-1] Preparation of Forming Raw Material:

First, a forming raw material for manufacturing the device main body 31 (the element base material) is prepared. Specifically, at least one ceramic raw material (a dielectric raw material) selected from the group consisting of, for example, alumina, a cordierite forming material, mullite, glass, zirconia, magnesia and titania is mixed with another component for use as the forming raw material, to prepare a slurried forming raw material. As the ceramic raw material (the dielectric raw material), the above raw material is preferable, but the raw material is not limited to the above example. As another raw material, a binder, a plasticizer, a dispersant, a dispersion medium or the like is preferably used.

There is not any special restriction on a binder, but an aqueous binder or a nonaqueous binder may be used. As the aqueous binder, methyl cellulose, polyvinyl alcohol, polyethylene oxide or the like can preferably be used, and as the nonaqueous binder, polyvinyl butyral, acrylic resin, polyethylene, polypropylene or the like can preferably be used. Examples of the acrylic resin include (meth)acrylic resin, (meth)acrylic ester copolymer, and acrylic ester-methacrylic ester copolymer.

An amount of the binder to be added is preferably from 3 to 20 parts by mass, and further preferably from 6 to 17 parts by mass with respect to 100 parts by mass of the dielectric raw material. With such a binder content, when the slurried forming raw material is formed into a green sheet, dried and fired, the generation of cracks or the like can be prevented.

As the plasticizer, glycerin, polyethylene glycol, dibutyl phthalate, di-2-ethyl hexyl phthalate, diisononyl phthalate or the like can be used.

An amount of the plasticizer to be added is preferably from 30 to 70 parts by mass, and further preferably from 45 to 55 parts by mass with respect to 100 parts by mass of the binder. If the amount is larger than 70 parts by mass, the green sheet becomes excessively soft, and is easily deformed in a step of processing the sheet. If the amount is smaller than 30 parts by mass, the green sheet becomes excessively hard. In this case, when the green sheet is simply bent, the green sheet is cracked, which might deteriorate handling properties.

As an aqueous dispersant, anionic surfactant, wax emulsion, pyridine or the like can be used, and as a nonaqueous dispersant, fatty acid, phosphate ester, synthetic surfactant or the like can be used.

An amount of the dispersant to be added is preferably from 0.5 to 3 parts by mass, and further preferably from 1 to 2 parts by mass with respect to 100 parts by mass of the dielectric raw material. If the amount is smaller than 0.5 part by mass, dispersibility of the dielectric raw material might lower, and cracks or the like might be generated in the green sheet. If the amount is larger than 3 parts by mass, the dispersibility of the dielectric raw material does not change, but impurities during firing increase.

As the dispersion medium, water can be used. An amount of the dispersion medium to be added is preferably from 50 to 200 parts by mass, and further preferably from 75 to 150 parts by mass with respect to 100 parts by mass of the dielectric raw material.

The above raw materials are sufficiently mixed by use of a pot made of alumina and an alumina ball, to prepare a slurried forming raw material for preparing the green sheet. Moreover, these materials are mixed in a ball mill by use of a mono ball, whereby the forming raw material may be prepared.

Next, the obtained slurried forming raw material for preparing the green sheet is stirred and defoamed under a reduced pressure, and further prepared to obtain a predetermined viscosity. The viscosity of the slurried forming raw material obtained in the preparation of the forming raw material is preferably from 2.0 to 6.0 Pa●s, further preferably from 3.0 to 5.0 Pa●s, and especially preferably from 3.5 to 4.5 Pa●s. When a viscosity range is regulated in this manner, the slurry is preferably easily formed into a sheet-like shape. If the slurry viscosity is excessively high or low, it might become difficult to form the sheet. It is to be noted that the viscosity of the slurry is a value measured with a B-type viscosity meter.

### [3-2] Forming Processing:

Next, the slurried forming raw material obtained by the above method is formed and processed into a tape-like shape, to prepare a green sheet which is long in one direction. There is not any special restriction on a forming/processing process, as long as the forming raw material can be formed into the sheet-like shape to form the green sheet, and a known process such as a doctor blade process, a press forming process, a rolling process and a calendar rolling process can be used. At this time, a green sheet for forming a through hole is prepared so as to form the through hole when green sheets are laminated. A thickness of the green sheet to be prepared is preferably from 50 to 800 µm.

On the surface of the obtained green sheet, electrodes (a pair of measurement electrodes and dust collection electrodes), wires, heating portions and lead terminals are arranged. When the particulate matter detection device 105 shown in Fig. 6A to Fig. 6D is prepared, as shown in Fig. 8 to Fig. 12, the electrodes, the wires, the heating portions and the lead terminals are preferably printed at corresponding positions of the green sheet so as to arrange the electrodes, the wires, the heating portions and the lead terminals at the predetermined positions. In particular, the measurement electrodes are formed (e.g., printed) so that the mutual space between the combteeth portions of one measurement electrode and the combteeth portions of the other measurement electrode on the outflow side of the measurement target gas is larger than the mutual space between the combteeth portions of the one measurement electrode and the combteeth portions of the other measurement electrode on the inflow side of the measurement target gas.

As to a conductive paste for forming (printing) the electrodes, the wires, the heating portions and the lead terminals, in accordance with materials required for forming the electrodes, the wires and the like, a binder and a solvent such as terpineol are added to powder containing at least one selected from the group consisting of gold, silver, platinum, nickel, molybdenum, and tungsten, and sufficiently kneaded by using a tri-roll mill or the like, whereby the paste can be prepared. The conductive paste formed in this manner and containing the materials required for forming the electrodes, the wires and the like is printed on the surface of the green sheet by use of screen printing or the like, to prepare the electrodes, the wires, the heating portions and the lead terminals having predetermined shapes.

Further specifically, a plurality of green sheets are prepared, and on one surface of each of two green sheets among the plurality of green sheets, dust collection electrodes are arranged. If necessary, wires are arranged on the arranged dust collection electrodes, respectively, to prepare two green sheets provided with the dust collection electrodes.

Furthermore, at a position of another green sheet where the through hole of the device main body is to be formed, combteeth portions of the pair of measurement electrodes are arranged, to form the green sheet provided with the measurement electrodes. It is to be noted that in this case, there are arranged a pair of measurement wires extending from the measurement electrodes to the other end of the detection device main body, respectively.

Furthermore, at positions superimposed on the combteeth portions of the measurement electrodes when superimposed on the green sheet provided with the measurement electrodes, such a cut portion as to form the through hole is formed to prepare the green sheet provided with the cut portion.

Furthermore, at a position of still another green sheet where at least the through hole is to be formed, the heating portions are arranged to form the green sheet provided with the heating portions. On this green sheet provided with the heating portions, there are also arranged wires extending toward the other end of the device main body.

Afterward, on the two green sheets provided with the dust collection electrodes, respectively, another green sheet which is not provided with electrodes or the like is superimposed to obtain a state where the dust collection electrodes and the wires are covered with the green sheet, thereby forming the green sheet including the embedded dust collection electrodes. Then, the green sheets are laminated so that the green sheet provided with the measurement electrodes and the green sheet provided with the cut portion are sandwiched between the two green sheets including the embedded dust collection electrodes. Furthermore, the green sheet provided with the heating portions is laminated on the outside of the above green sheet, to form a green sheet laminate having a state where the cut portion is sandwiched between two dust collection electrodes.

The above plurality of green sheets may simultaneously be laminated, or, for example, the green sheets including the embedded dust collection electrodes are first prepared and then laminated on another green sheet. The laminating is preferably performed while pressurizing.

In the above manufacturing method of the particulate matter detection device of the present invention, desirable electrodes and the like are arranged on a plurality of green sheets, and the green sheets provided with the electrodes and the like are laminated, dried and fired to manufacture the particulate matter detection device, whereby the particulate matter detection device of the present invention can efficiently be manufactured.

### [3-3] Firing:

Next, the green sheet laminate is dried and fired to obtain the particulate matter detection device. Further specifically, the obtained green sheet laminate is dried at 60 to 150°C, and fired at 1200 to 1600°C to prepare the particulate matter detection device. When the green sheets contain an organic binder, degreasing is preferably performed at 400 to 800°C before the firing.

### [Examples]

Hereinafter, the present invention will further specifically be described with respect to examples, but the present invention is not limited to these examples.

### (Example 1)

### (Preparation of Forming Raw Material)

As a dielectric raw material, alumina was used, as a binder, polyvinyl butyral was used, as a plasticizer, di-2-ethyl hexyl phthalate was used, as a dispersant, sorbitan tri-oleate was used, and as a dispersion medium, an organic solvent (xylene:butanol = 6:4 (mass ratio)) was used. These materials were put into a pot made of alumina, and mixed, to prepare a slurried forming raw material for preparing a green sheet. Amounts of the raw materials for use were 7 parts by mass of the binder, 3.5 parts by mass of the plasticizer, 1.5 parts by mass of the dispersant and 100 parts by mass of the organic solvent with respect to 100 parts by mass of alumina.

Next, the obtained slurried forming raw material for preparing the green sheet was stirred and defoamed under a reduced pressure, and prepared so as to obtain a viscosity of 4 Pa●s. The viscosity of the slurry was measured with a B-type viscosity meter.

### (Forming Processing)

Next, the slurried forming raw material obtained by the above method was formed and processed into a sheet-like shape by use of a doctor blade process. In this case, a green sheet provided with a cut portion was also prepared so that a through hole was formed when the green sheets were laminated. A thickness of the green sheet was set to 250 µm.

On the surface of the obtained green sheet, as shown in Fig. 7 to Fig. 12, a pair of measurement electrodes, dust collection electrodes, wires and lead terminals were formed. As to a conductive paste for forming the electrodes, the wires and the lead terminals to be arranged, to platinum powder, there were added 2-ethyl hexanol as a solvent, polyvinyl butyral as a binder, di-2-ethyl hexyl phthalate as a plasticizer, sorbitan trioleate as a dispersant, alumina as a co-base of the green sheet, and glass frit as a sintering aid. The materials were sufficiently kneaded by using a stone mill and a tri-roll mill, to prepare the conductive paste (in terms of a mass ratio, platinum:alumina:glass frit:2-ethyl hexanol:polyvinyl butyral:di-2-ethyl hexyl phthalate:sorbitan trioleate = 80:15:5:50:7:3.5:1).

Moreover, as to a conductive paste for forming heating portions, to tungsten powder, there were added 2-ethyl hexanol as a solvent, polyvinyl butyral as a binder, di-2-ethyl hexyl phthalate as a plasticizer, sorbitan trioleate as a dispersant, alumina as a co-base of the green sheet, and glass frit as a sintering aid. The materials were sufficiently kneaded by using a stone mill and a tri-roll mill, to prepare the conductive paste (in terms of a mass ratio, tungsten:alumina:glass frit:2-ethyl hexanol:polyvinyl butyral:di-2-ethyl hexyl phthalate:sorbitan trioleate = 75.5:15:5:50:7:3.5:1).

The electrodes, a ground electrode, the wires, the lead terminals and the heating portions were formed through screen printing by use of the pastes obtained by the above processes. In Example 1, each measurement electrode was formed so that five combteeth portions each having a width of 100 µm and a length of 8 mm were connected to one another by a comb spine portion having a width of 200 µm and a length of 3.5 mm at one end of each portion. It is to be noted that a mutual space between adjacent combteeth portions positioned on the most outflow side was 100 mm, and the mutual space between the combteeth portions gradually increased as much as 20 µm toward the outflow side. That is, the second space between the combteeth portions from the inflow side was 120 µm, and finally the space between the combteeth portions on the most outflow side was 260 µm.

When the green sheets provided with the electrodes were laminated, the green sheets were pressurized and laminated by using an uniaxial heatable press machine, to obtain an unfired body of the particulate matter detection device including the green sheet laminate.

### (Firing)

The obtained green sheet laminate was dried at 120°C, and fired at 1500°C to prepare the particulate matter detection device. The obtained particulate matter detection device had such a shape that the other end thereof had a smaller size as shown in Fig. 6B in a rectangular parallelepiped body having a size of 0.7 cm x 0.2 cm x 12 cm. The other end having the smaller size had a width of 4.25 cm and a length of 1.2 cm.

### (Preparation of Particulate Matter Detection Device)

The obtained particulate matter detection device was electrically connected to LCR meter 4263B manufactured by Agilent Technologies Inc. as characteristics measurement means and particulate matter amount calculation means, to measure an electrostatic capacity between the pair of measurement electrodes, thereby detecting a particulate matter.

### (Measurement of Particulate Matter)

The particulate matter was detected by using the particulate matter detection device of Example 1 obtained in this manner. Specifically, a concentration of the particulate matter (soot) was set to 1 mg/m³, and measured for two minutes, to measure a change amount of an electrostatic capacity. Afterward, the concentration of the particulate matter (the soot) was successively increased as much as 1 mg/m³, and the change of the electrostatic capacity was measured until the concentration became 12 mg/m³.

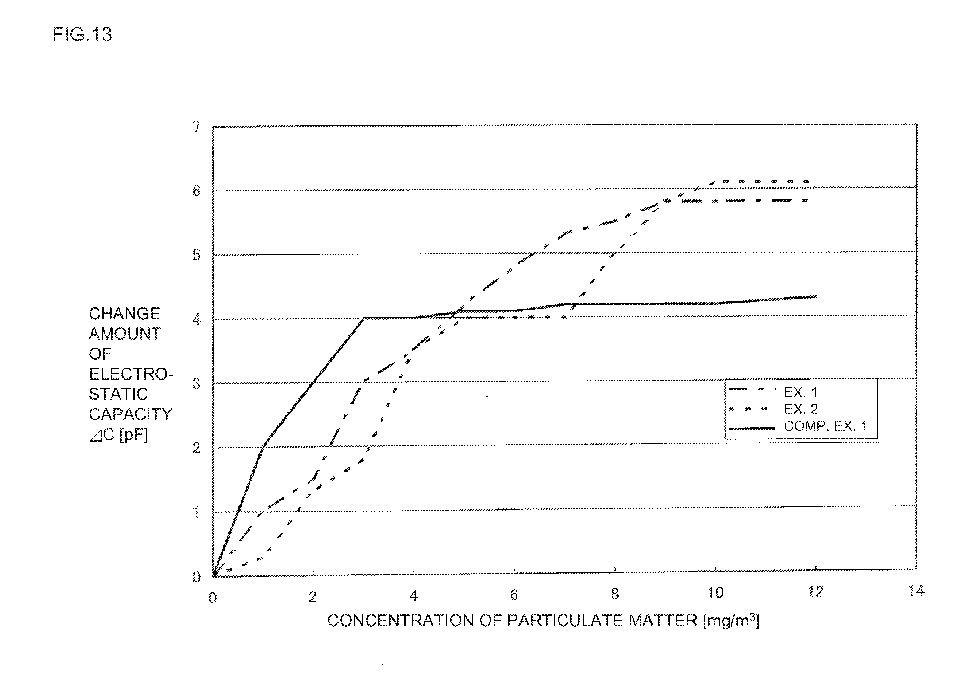

It is to be noted that the concentration [mg/m³] of the particulate matter amount (the soot) in the exhaust gas was simultaneously measured with a smoke meter (trade name: model 4158 manufactured by AVL Corp.). A relation between a change amount ΔC ([pF]) of the electrostatic capacity and the concentration [mg/m³] of the particulate matter amount measured by the particulate matter detection device of Example 1 is shown in Fig. 13. Fig. 13 is a graph showing the relation between the change amount ΔC ([pF]) of the electrostatic capacity and the concentration [mg/m³] of the particulate matter amount measured by the particulate matter detection device of Example 1, the abscissa indicates the concentration [mg/m³] of the particulate matter amount, and the ordinate indicates the change amount ΔC ([pF]) of the electrostatic capacity.

### (Example 2)

A particulate matter detection device of Example 2 was prepared in the same manner as in Example 1 except that each space in a portion where five combteeth portions engaged with five combteeth portions from an inflow side was set to 100 µm and each space in a portion where remaining five combteeth portions engaged with remaining five combteeth portions on an outflow side was set to 200 µm to form measurement electrodes.

### (Comparative Example 1)

A particulate matter detection device of Comparative Example 1 was prepared in the same manner as in Example 1 except that from an inflow side to an outflow side, each space between combteeth portions was 100 µm (i.e., the spaces of the combteeth portions were uniform) to form measurement electrodes.

A particulate matter was measured by using the obtained particulate matter detection devices of Example 2 and Comparative Example 1 by a method similar to Example 1. A relation between a change amount ΔC ([pF]) of an electrostatic capacity and a concentration [mg/m³] of a particulate matter amount measured by the particulate matter detection devices of Example 2 and Comparative Example 1 is shown in Fig. 13.

### (Result)

As shown in Fig. 13, in the particulate matter detection devices of Examples 1 and 2, even when the particulate matter having a high concentration was detected, satisfactory measurement could continuously be performed. On the other hand, in Comparative Example 1, nearly when the concentration of the particulate matter (the soot) exceeded 3 mg/m³, the detecting portion (the combteeth portions) was saturated with the particulate matter (the soot). Even when the particulate matter further adhered, the electric characteristics hardly changed.

### Industrial Applicability

A particulate matter detection device of the present invention can preferably be utilized to immediately detect the generation of a defect of a DPF, thereby recognizing the abnormality of the device, which can contribute to the prevention of air pollution.

### Description of Reference Numerals

11: element base material, 12: pair of measurement electrodes, 12a and 12b: measurement electrode, 13: combteeth portion, 14: comb spine portion, 15: comb spine covering portion, 16, 16a and 16b: measurement wire, 17a and 17b: measurement lead terminal, 18: inflow side, 19: outflow side, 20: characteristics measurement means, 21: particulate matter amount calculation means, 22: electrode protective film, 31: device main body, 31a: one end, 31b: the other end, 31c: one tip portion, 31d: the other tip portion, 32: through hole, 41: dust collection electrode (high-voltage dust collection electrode), 42: dust collection electrode (ground dust collection electrode), 41a and 42a: dust collection lead terminal, 41b and 42b: dust collection wire, 43: heating portion, 43a: heating lead terminal, 43b: heating wire, and 100, 101, 102, 103, 104 and 105: particulate matter detection device.

## Claims

1. A particulate matter detection device 100 comprising: a plate-like element base material 11; a pair of measurement electrodes 12 arranged in the element base material 11; characteristics measurement means 20 for measuring electric characteristics between the pair of measurement electrodes 12; and particulate matter amount calculation means 21 for obtaining an amount of a particulate matter collected in and around the pair of measurement electrodes 12 on the basis of a change amount of the electric characteristics measured by the characteristics measurement means 20,
**characterized in that** the measurement electrodes 12a and 12b constituting the pair of measurement electrodes 12 are combteeth-like electrodes each including a plurality of planarly arranged combteeth portions 13, and a comb spine portion 14 which connects the plurality of combteeth portions 13 of each of the measurement electrodes 12a and 12b to one another at one end of each of the plurality of combteeth portions 13, and
the plurality of combteeth portions 13 are arranged in the element base material 11 so that combteeth extend in a direction which is vertical to a flow direction of a measurement target gas and a mutual space between the combteeth portions 13 of the one measurement electrode 12a or 12b and the combteeth portions 13 of the other measurement electrode 12b or 12a on an outflow side of the measurement target gas is larger than a mutual space between the combteeth portions 13 of the one measurement electrode 12a or 12b and the combteeth portions 13 of the other measurement electrode 12b or 12a on an inflow side of the measurement target gas.

2. The particulate matter detection device 100 according to claim 1, wherein the mutual space between the combteeth portions 13 in a region on the outflow side of the measurement target gas is larger than the mutual space between the combteeth portions 13 in a region other than the outflow region on the inflow side of the measurement target gas, and the mutual space between the combteeth portions 13 increases stepwise for each region from the region on the inflow side to the other region on the outflow side.

3. The particulate matter detection device 100 according to claim 1 or 2, wherein at least part of a mutual space between the combteeth portions 13 of the one measurement electrode 12a or 12b and the combteeth portions 13 of the other measurement electrode 12b or 12a gradually increases from the inflow side to the outflow side of the measurement target gas.

4. The particulate matter detection device 100 according to any one of claims 1 to 3, wherein the mutual space between the combteeth portions 13 of the one measurement electrode 12a or 12b and the combteeth portions 13 of the other measurement electrode 12b or 12a on the outflow side of the measurement target gas is from 1.5 to 10 times as much as the mutual space between the combteeth portions 13 of the one measurement electrode 12a or 12b and the combteeth portions 13 of the other measurement electrode 12b or 12a on the inflow side of the measurement target gas.

5. The particulate matter detection device 100 according to any one of claims 1 to 4, wherein the comb spine portion 14 of at least one of the measurement electrodes 12a and 12b is covered with a comb spine covering portion 15 made of a dielectric material.

6. The particulate matter detection device 100 according to claim 5, wherein at least part of the surfaces of the pair of measurement electrodes 12 is covered with an electrode protective film 22 made of a dielectric material having a smaller thickness than the comb spine covering portion 15.

7. The particulate matter detection device 100 according to any one of claims 1 to 4, wherein the element base material 11 is a device main body 31 which includes at least one through hole 32 formed in one end thereof and which is long in one direction, and
the combteeth portions 13 of the pair of measurement electrodes 12 are arranged on an inner side surface of one wall which forms the through hole 32 or in the wall, and the comb spine portions 14 of the pair of measurement electrodes 12 extend to a position where there is disposed a wall rising from the wall on which the combteeth portions 13 are arranged, among the walls which form the through hole 32.
